# EUROPEAN PATENT APPLICATION

(11) **EP 4 764 406 A1**
(43) Date of publication of application: **24.06.2026**
(21) Application number: 24222103.4
(22) Date of filing: 20.12.2024
(51) Int. Cl.: G01C 15/06

(54) **SURVEYING POLE AND METHOD IMPLEMENTED IN A SURVEYING POLE**

(71) Applicant: Trimble Inc, Westminster CO 80021 (US)
(72) Inventor: ZEIN EDDINE, Rachid, Westminster, 80021 (US); BREMAUD, Jean Charles, Westminster, 80021 (US); POTIN, Charleine, 800021 Westminster (US)
(74) Representative: AWA Sweden AB

(57) **Abstract**

There is provided a surveying pole comprising a pole arrangement and a target internally arranged in the pole arrangement, the target being configured to reflect and/or refract light depending on a medium in contact with a surface of the target. A top unit mounted on the pole arrangement comprises a detector unit configured to emit light for propagation in the pole arrangement towards the target, and detect light reflected by the target. Said pole arrangement comprises a first portion forming a reservoir adapted to collect liquid, such that a collected liquid is in contact with said surface of the target. The surveying pole further comprises a control unit configured to, upon an absence of detected light reflected by the target, or upon a decrease in energy level of the detected light reflected by the target, generate a warning signal.

## Description

### Technical field

The invention relates to a surveying pole and to a method implemented in a surveying pole. More specifically, the present disclosure relates to generating a warning signal if an absence of light or a decreased energy level is detected.

### Technical Background

Surveying involves the determination of three-dimensional positions of points to map and create a model of the terrain or structure being surveyed. For this purpose, surveying poles having a target and/or other piece of surveying equipment, such as a GNSS (Global Navigation Satellite System) antenna, may be used. In use, a surveying pole is placed in contact with a measurement point. A surveying pole with a target is typically used in cooperation with a geodetic instrument, such as a geodetic scanner, a theodolite or a total station, to determine a distance and angle between the measurement point and the known position of the geodetic instrument. A surveying pole with a GNSS antenna may obtain its own position from signals received by satellites of the GNSS system. Thus, the position of the target and/or the GNSS antenna is obtained. For determination of the position of the measurement point, it is necessary to know the height of the target/antenna above the measurement point. For this purpose, an accurate measurement of the length of the surveying pole is needed. The surveying pole may be used in harsh environments, including wet, rainy, and aquatic areas, which may have a negative effect on the accuracy of the measurement of the surveying pole. However, it may be difficult for the user to know whether the obtained measurement is accurate or not.

### Summary

In view of the above, an object of the present disclosure is to provide an improved surveying pole, enabling a warning signal to be generated if unfavourable conditions are present.

The invention is defined by the appended claims, with embodiments being set forth in the appended dependent claims, in the following description, and in the drawings.

According to a first aspect of the inventive concept, there is provided a surveying pole comprising a pole arrangement extending along a longitudinal axis between a first end and a second end.

The surveying pole further comprises a target internally arranged in the pole arrangement at the first end. The target is configured to reflect and/or refract light depending on a medium in contact with a surface of the target.

A top unit is mounted on the pole arrangement at the second end, and the top unit comprises a detector unit configured to: emit light for propagation in the pole arrangement towards the target, and detect light reflected by the target.

Further, the pole arrangement comprises a first portion at the first end forming a reservoir adapted to collect liquid, such that a collected liquid is in contact with said surface of the target.

The surveying pole further comprises a control unit configured to, upon an absence of detected light reflected by the target (i.e., upon absence of light detection), or upon a decrease in energy level of the detected light reflected by the target, generate a warning signal.

In many applications, surveying poles are used outdoors and may thus be exposed to changing environments, including wet, rainy, and aquatic areas. The present inventive concept is at least partly based on the realization that any foreign matter present inside the pole arrangement may affect measurements based on the light detected by the detector unit. More specifically, if the medium in which the light propagates inside the pole arrangement changes, along all or a portion of the light path between the detector unit and the target and/or between the target and the detector unit, the refraction index of the medium in which the light propagates may also change. Thus, if a liquid, such as water, is present in the pole arrangement between the detector unit and the target, the characteristics of the light detected by the detector unit may be different than if no water is present. For instance, if part of the pole arrangement is (at least partly) filled with water, the speed of propagation of light in the pole arrangement will decrease. Any measurement relying on the time needed for light to propagate from the detector unit to the target and back to the detector unit may be affected and become inaccurate.

Thus, the control unit may be configured to generate a warning signal upon the detector unit detecting an absence of light reflected by the target. The control unit may be configured to generate a warning signal upon the detector unit detecting a decrease in energy level of the detected light reflected by the target. A decrease in energy level may be for example be determined based on a comparison with a previous value of the energy level, or with an average value or standard deviation over a predetermined time or a predetermined number of samples.

It is to be understood that the detector unit is configured to emit light, e.g., a laser beam, to be propagated towards the target. The emitted light may be directly directed at the target located at the first end. Alternatively, the detector unit is arranged such that the light emitted from the detector unit is redirected towards the target by an optical element. The optical element may be a prism, a mirror, a light guide, and combinations thereof.

As the emitted light reaches the target, the target will reflect and/or refract the light depending on the medium in contact with a surface of the target.

During normal operating conditions of the surveying pole, the target reflects the emitted light such that the detector unit is able to receive and detect the reflected light. When a sufficient energy level of the light is detected, no warning signal may be generated by the control unit and further assessment of the input may be performed, such as determining a length of the surveying pole based on the received light.

In some cases, the surface of the target may be in contact with more than one medium, e.g., two mediums. In such a scenario, a first portion of the surface of the target may be in contact with a first medium and a second portion of the target may be in contact with a second medium, resulting in that one portion of the light which has reached the target may be reflected towards the detector unit and another portion may be refracted away from the detector unit. For example, the reservoir may be partially filled with a liquid, such as water. The first portion of said surface may thus be in contact with the liquid, whereas the second portion of the surface is above the level of the liquid and thereby in contact with air.

In a situation where a portion of the emitted light is refracted, the reflected portion may not constitute a sufficient energy level such that an accurate measurement can be performed. Thus, upon a decrease in the energy level of the received and detected light, the control unit is configured to generate a warning signal. This would indicate that an accurate measurement cannot be performed, or that no measurement is possible at all.

In some cases, the surface of the target may be in contact with a medium which causes the target to refract the light which has reached the target to such an extent that the detector unit detects an absence of reflected light. In such a situation, a measurement cannot be performed as the detector unit has not received any input. A warning signal is generated by the control unit, indicating that no measurement can be performed.

An advantage of having a surveying pole configured to generate a warning signal is that the user may be informed if no measurement or if no accurate measurement can be performed, thereby providing a more secure measuring.

Whether the target reflects or refracts the light emitted by the detector unit may depend on the refractive index of the medium which is in contact with said surface of the target. During normal operating conditions of the surveying pole, the medium in contact with the surface of the target has a refractive index such that total internal reflection, TIR, within the target is achieved. During non-optimal operating conditions of the surveying pole, at least a portion of the target may be exposed to a medium having a refractive index causing the portion of the target to refract light.

The energy level of detected light reflected from the target may correspond to the share of light emitted by the detector unit which is reflected by the target towards the detector unit. Put in other words, the light emitted by the detector unit has a first energy level. If all emitted light is reflected by the target, the detector unit will detect light having substantially the same energy level as when emitted. If a portion of the emitted light is refracted by the target, a decreased energy level will be detected by the detector unit as only a share of the emitted light is reflected.

The control unit may be configured to generate the warning signal when the energy level of the detected light reflected by the target is below a predetermined threshold.

Additionally, or alternatively, the control unit may be configured to generate the warning signal when a standard deviation of a measurement performed on the detected light exceeds a predetermined standard deviation threshold.

The surveying pole may be able to conduct accurate measurement even in a situation where the detector unit detects a small decrease of energy level. A predetermined threshold may be set to ensure that if the energy level of the detected light is not sufficient to perform a measurement, the control unit will generate a warning signal.

The light emitted by the detector unit may be a collimated light beam.

The top unit may comprise an optical arrangement adapted to provide a divergent beam on the target. In at least one example embodiment, the optical arrangement comprises a converging lens arranged between said detector unit and the pole arrangement, which lens has a focal length shorter than the distance between the top unit and the target.

Such an arrangement may be advantageous as it will expand the light beam towards the target. This may increase the amount of light reflected by the target.

The first portion of the pole arrangement which forms the reservoir may comprise an impermeable bottom and an impermeable side wall. The first portion of the pole arrangement may form an integral part of the pole arrangement or may be a separate part configured to be connected to the pole arrangement.

If the first portion is a separate part connectable to the pole arrangement, the target is arranged such that, when the first portion is connected to the pole arrangement, it is positioned within the space formed by the reservoir. When the first portion is a separate part connectable to the pole arrangement, the first portion may form a bottom of the pole arrangement and thereby close the pole arrangement at one end.

During normal operating conditions of the surveying pole, only air is present in the reservoir, and air is thereby in contact with the surface of the target. However, during use of the surveying pole, a liquid such as water may leak into the pole arrangement. The reservoir is adapted to collect the liquid and the target is partially or entirely surrounded by the liquid. As discussed, the change of medium in contact with the surface of the target and thereby the change of the surrounding medium's refracting index may influence the target's capability of reflecting the light emitted by the detector unit.

Providing the reservoir as a separate first portion facilitates cleaning and emptying of the reservoir. As an example, if the control unit generates a warning signal, it indicates that an unwanted medium has entered the pole arrangement and that it has been collected by the reservoir. Thus, it is desired to remove such unwanted medium. By being able to disengage the first portion with the pole arrangement, the reservoir may be emptied and thereafter reconnected to the pole arrangement.

If the first portion forms part of the pole arrangement, a sealable opening may be arranged in connection with the reservoir such that the opening can be opened to empty the reservoir and thereafter be closed again.

The pole arrangement may further comprise a second portion arranged between the target and the second end of the pole arrangement. The pole arrangement is configured to allow liquid to pass from said second portion to said first portion to be collected in said reservoir. It is to be understood that preferably, no liquid, such as water, should penetrate the pole arrangement of the surveying pole. However, this may not be possible to avoid in all operating conditions. Hence, it is advantageous if the pole arrangement is configured to allow any liquid which has leaked into the pole arrangement to be passed from the second portion to the first portion and be collected by the reservoir.

The second portion may internally comprise ridges and/or grooves configured to guide the liquid towards the reservoir.

The target is preferably a total internal reflector. The target may be a prism.

The target may be a corner cube prism. The corner cube prism is designed to reflect light back toward the source, by using three perpendicular reflective surfaces arranged in the shape of a cube's corner.

The target may be a glass cone. The glass cone may be arranged with a top surface at 90° with respect to the longitudinal axis.

The surveying pole may further comprise an electronic distance measurement, EDM, unit. Optionally, the EDM unit is the same as the detector unit. The EDM unit may be arranged in the top unit.

The EDM unit may be configured to determine a distance to the target based on the received and detected light. The control unit may be configured to determine a length of the pole arrangement based on the distance determined by the EDM unit. The EDM unit may be configured to determine a distance to the target based on a phase shift or time delay of the detected reflected light. If there is an absence of reflected light or the reflected light has a decreased energy level, the EDM unit cannot determine the distance to the target. In such a case, the control unit generates a warning signal such that the user is given information that no distance could be determined, and the user can thereafter perform another measuring attempt or empty the reservoir.

The detector unit comprises a laser for emitting light towards the target. If the EDM unit is the same as the detector unit, the EDM unit is configured to emit a light by e.g., a laser.

The control unit may be configured to generate the warning signal when the energy level of the detected light reflected by the target is below a predetermined threshold, wherein said predetermined threshold corresponds to the minimum energy level needed for the EDM unit to be able to determine the distance to the target based on the received and detected light. Alternatively, or additionally, a standard deviation of the determined distance to the target, may be determined. The control unit may be configured to generate the warning signal when the standard deviation exceeds a predetermined standard deviation threshold. The standard deviation may be computed based on a predetermined number of earlier performed measurements.

The top unit may comprise a positioning device.

The positioning device may comprise a reflective element, a light emitting element, and/or a GNSS (Global Navigation Satellite System) antenna, or any combination thereof. The positioning device may be configured to passively cooperate with a geodetic instrument, such as for example a theodolite or a total station. It may be configured to actively cooperate with a geodetic instrument, for example for tracking purposes.

The top unit may comprise a communication device configured to transmit the determined length of the pole and/or said warning signal to an external unit. Alternatively, a distance between a point of contact of the surveying pole with the terrain and the positioning device may be calculated based on the determined length and on fixed distances of the surveying pole, such as the distance between the point of contact with the terrain and the target, and the distance between the detector unit and the positioning device. For example, the determined length, or calculated distance, may be transmitted to a geodetic instrument with which the surveying pole is cooperating. Alternatively, the determined length, or calculated distance, may be transmitted to a separate, optionally mobile, control unit.

The top unit may be detachably mounted on the pole arrangement. This may allow the top unit to be used with different pole arrangements. In particular, such a top unit may easily be transferred between different pole arrangements, depending on the needs of the current application. For example, such a top unit may be mounted on pole arrangements of different heights or lengths, stiffness, or other characteristics. Should the pole arrangement be damaged, a detachably mounted top unit may be easily switched to a working pole arrangement.

The pole arrangement may be a pole arrangement of fixed length. Alternatively, the pole arrangement may comprise at least a first pole section and a second pole section telescopically arranged to provide length adjustment of said surveying pole.

The second pole section may be telescopically movable within the first pole section, or the first pole section may be telescopically movable within the second pole section. In other words, the cross section of the second pole section may be smaller than the cross section of the first pole section, such that the second pole section may radially fit inside of the first pole section. A different arrangement, e.g. one in which the second pole section has a larger cross section than the first pole section, and the first pole section is telescopically movable within the second pole section is also possible. A pole arrangement having more than two pole sections is also conceivable.

The top unit may comprise further elements, such as a tilt sensor, e.g., for determining a tilt angle between the longitudinal axis and the vertical direction.

The top unit may comprise a battery for powering said positioning device and said detector unit. The battery may further power other components present in the top unit. Thus, the top unit, or the components therein, may not need to be powered by an external source of power. In particular, no external power source is needed on or within the pole arrangement.

According to a second aspect of the inventive concept, there is provided a method implemented in a surveying pole according to the first aspect, the method comprising:
emitting, by the detector unit, light for propagation in the pole arrangement towards the target, and
detecting, by the detector unit, light reflected by the target,
generating a warning signal, by the control unit, upon an absence of detected light reflected by the target, or upon a decrease in energy level of the detected light reflected by the target.

It may be noted that the use of first, second, third, fourth, fifth, etc. are mainly to be seen as labels facilitating reading and that it does not necessarily mean that there need to be all the intervening numbers of portions present. It may e.g., be noted that it is contemplated to have a design where there is a first portion, a second portion, a third portion and a fifth portion, with the fourth portion being omitted. However, to facilitate reading, we have consistently used the numbering first, second, third, fourth, etc., as labels, and in a sense based on an embodiment including all conceivable portions.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

Aspects of the present inventive concept, including its particular features and further advantages, will now be described with reference to the drawings, in which:
Figure 1 illustrates a typical scene of a surveying pole according to the present inventive concept in use.
Figures 2a and 2b schematically illustrate a pole arrangement of an embodiment of the surveying pole.
Figure 3 schematically illustrates in more detail the top unit of the surveying pole of Fig. 1 or Figs. 2a and 2b.
Figures 4a and 4b schematically illustrate in more detail the target of the surveying pole of Fig. 1 or Figs. 2a and 2b.
Figure 5 is a flow chart illustrating a method according to the present inventive concept.

### Detailed description

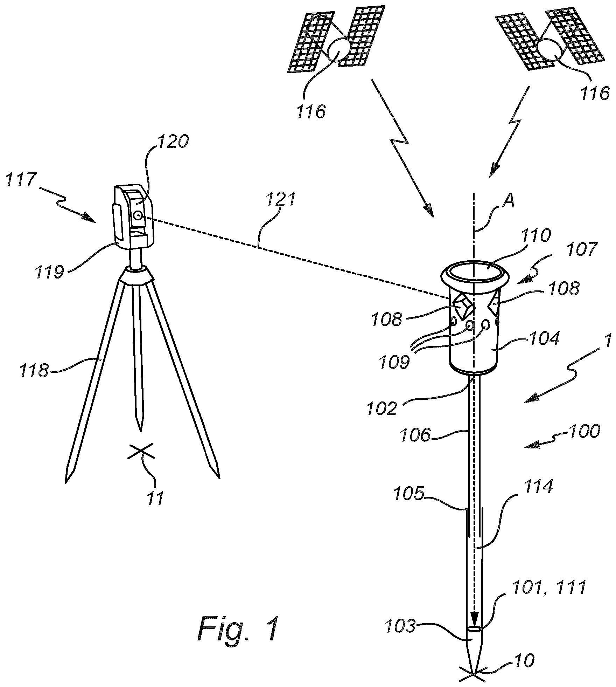

A typical scene of a surveying pole 1 according to the present inventive concept in use is shown in Fig. 1. The surveying pole 1 comprises a pole arrangement 100 extending along a longitudinal axis A between a first end 101 and a second end 102. A top unit 104 is mounted on the pole arrangement 100 at the second end 102 and extends along a longitudinal axis A. The top unit 104 comprises a positioning device 107, which positioning device may comprise reflective elements 108, light emitting elements 109, and/or a GNSS (Global Navigation Satellite System) antenna 110. The top unit 104 further comprises a detector unit configured to emit light for propagation in the pole arrangement towards a target 111 arranged at the first end 101, and receive and detect light reflected by the target 111. In the present example, the detector unit is an electronic distance measurement (EDM) unit 112 (not visible in Fig. 1) configured to determine a distance to a target 111. The top unit 104 further comprises a control unit 115 (not visible in Fig. 1). The control unit 115 is configured to, upon an absence of detected light reflected by the target 111, or upon a decrease in energy level of the detected light reflected by the target 111, generate a warning signal. The control unit 115 may be configured to determine the length of the pole arrangement 100 based on the distance determined by the EDM unit 112. The length may also be determined by a separate processor. In the present example, the control unit 115 is arranged within the top unit 104.

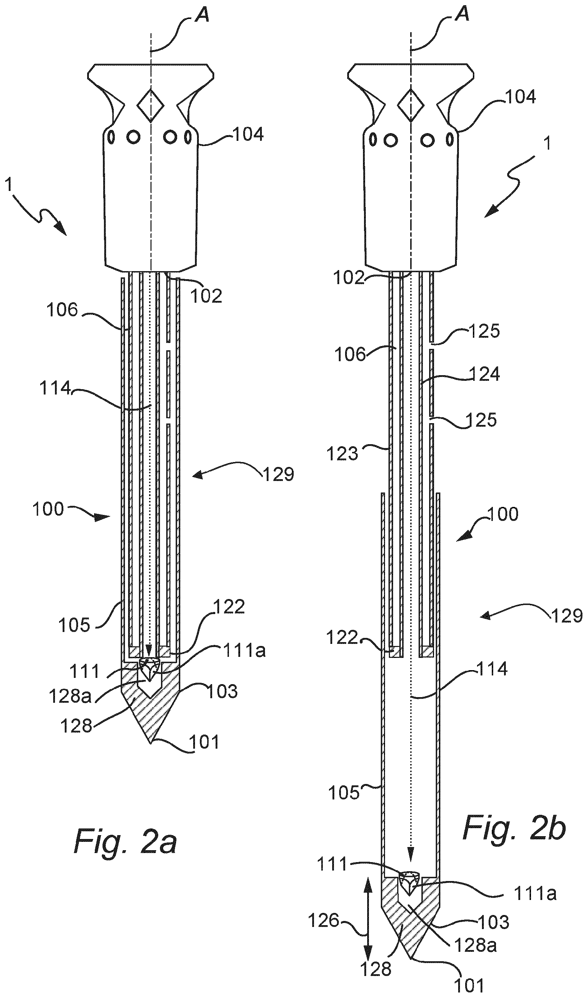

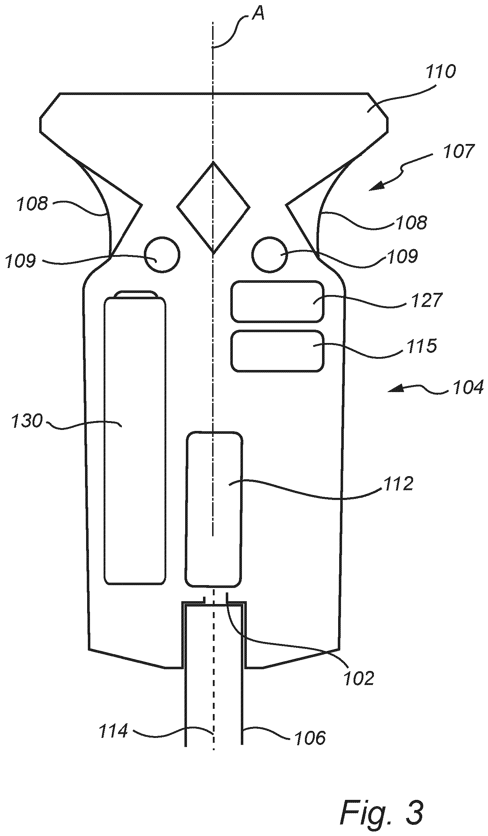

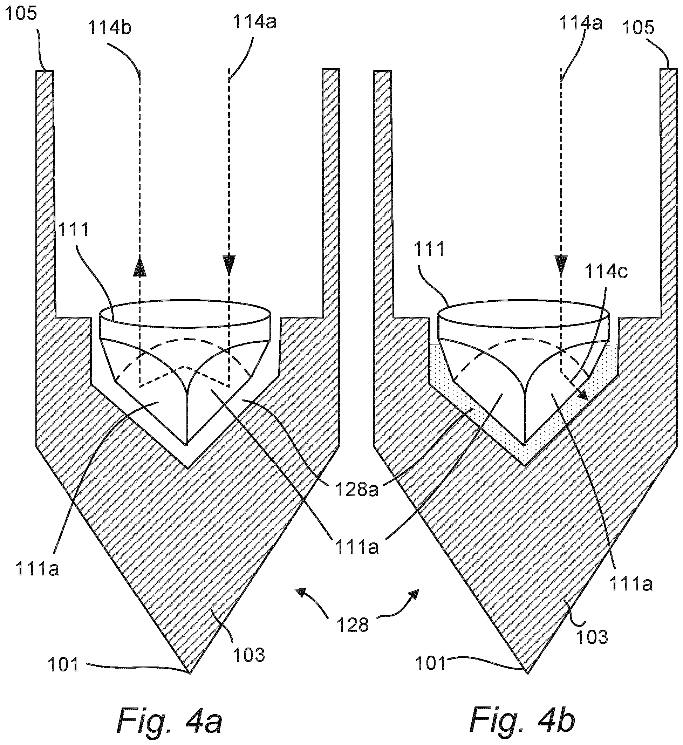

The target 111 is internally arranged in the pole arrangement 100 and configured to reflect and/or refract light depending on a medium in contact with a surface 111a of the target 111, as will be described in more detail in connection to Figs. 4a and 4b. The pole arrangement will be described in further detail in connection to Figs. 2a and 2b. As will be more readily apparent in Fig. 3, the detector unit/EDM unit 112 may be arranged along the longitudinal axis A. In other embodiments, not shown in any of the drawings, the detector unit/EDM unit 112 may be arranged offset with respect to the longitudinal axis A such that a portion of a light path 114 between the detector unit/EDM unit 112 and the target 111 does not coincide with the longitudinal axis A in the top unit 104.

The pole arrangement 100 comprises a first pole section 105 and a second pole section 106 telescopically arranged to provide length adjustment of the surveying pole 1. Although the figures show a telescopic pole arrangement, the pole arrangement 100 may also be a pole arrangement of fixed length. In other words, the length of the pole arrangement 100 may be non-adjustable. The top unit 104 may thus be used with interchangeable pole arrangements having different fixed lengths, or different adjustable lengths.

A pointing tip 103 is mounted at the first end 101 of the pole arrangement 100. In use of the surveying pole 1, as shown in Fig.1, when making a measurement on a point of interest 10 on the terrain or on a structure, the pointing tip 103 is placed on the point of interest 10. Typically, the surveying pole 1 is held in a vertical position during a measurement. Accordingly, the pointing tip 103 is the lowest part of the surveying pole 1 while in use, whereas the top unit 104 is at the highest part of the surveying pole 1. In the following, when referring to the surveying pole 1, parts thereof and/or elements comprised therein, expressions such as above, higher, below, lower, etc., should be interpreted 10 as referring to the surveying pole 1 when in a typical in-use position, as described above. More precisely, such expressions should be interpreted so that, when the surveying pole 1 is in use, an element which is above or higher than another element is closer to the sky along the longitudinal axis A than that element; conversely, an element which is below or lower than another element is closer to the point of interest 10 along the longitudinal axis A than that element.

The first end 101 may thus refer to the lowest end of the pole arrangement and the second end 102 may refer to the highest end of the pole arrangement. The first end may be the lowest end of the lowest pole section. If a pointing tip 103 is mounted on the pole arrangement, the tip of the pointing tip 103 may be considered the first end.

A first step in determining the position of the point of interest 10 is to determine the position of the positioning device 107.

In the example of Fig. 1, the position of the positioning device 107 may be determined in cooperation with a geodetic instrument, here illustrated as a total station 117 mounted on a tripod 118 and positioned above a point of reference 11. The total station 117 comprises an alidade 119 rotatable about a first axis (not shown) and a center unit 120 rotatable about a second axis (not shown). Typically, the total station 117 is set up so that, in use, the first and second axes are vertical and horizontal, respectively. The first and second axes intersect within the center unit 120 such that a sighting axis 121 of the total station 117 is rotatable about the intersection point of the axes. The center unit 120 may comprise one or more measurement device, such as an EDM unit. Furthermore, the center unit 120 may comprise one or more sensors, such as camera and/or a light detector, as well as a control unit for controlling the measurement devices and sensors. The total station 117 is equipped with sensors, such angle sensors and/or accelerometers or inertial measurement units, for determining the orientation of the sighting axis 121.

The point of reference 11 may have a known position, e.g., in a common reference frame. In order to determine the position of the point of interest 10 in relation to the point of reference 11, the EDM unit of the center unit 120 may for example measure the distance between the positioning device 107 of the surveying pole 1 and the total station 117 based on light emitted towards the positioning device 107 by the EDM unit and reflected back towards the total station 117 by a reflective element 108 of the positioning device 107. The position of the positioning device 107 may then be derived based on the measured distance and the orientation of the sighting axis 121.

Alternatively, or additionally, the GNSS antenna 110, or receiver, may receive positioning data from a GNSS, illustrated by a plurality of satellites 116. Knowing the position of the positioning device 107, the position of the point of interest 10 may then be derived based on the distance between the positioning device 107 and the point of interest 10, i.e., the distance between the positioning device 107 and (the tip of) the pointing tip 103. For this purpose, an accurate measurement of the length of the pole arrangement 100 of the surveying pole 1 is needed.

It should be noted that in the scene depicted in Fig. 1, the sighting axis 121 of the total station 117 is unobstructed between the total station 117 and the positioning device 107 of the surveying pole 1. There may be situations in which a measurement of a point of interest is needed where there is an obstacle between the total station 117 and the positioning device 107. Adjusting the length of the surveying pole 1 to move the positioning device 107 higher up may then provide a direct line of sight between the total station 117 and the positioning device 107. Conversely, adjusting the length of the surveying pole 1 to a shorter length may be desirable, for example, if an object above the point of interest (a branch of a tree, or part of a structure such as a roof, for instance) is preventing the surveying pole from being positioned on the point of interest. In general, a surveying pole 1 having an adjustable length provides improved flexibility in terms of positioning, and improved handling for the operator of the surveying pole 1. As mentioned above, the top unit 104 may also be mounted on pole arrangements of a fixed length. Thus, an operator may choose a pole arrangement of an appropriate length for a particular application. For example, a longer pole arrangement may be chosen to provide a direct line of sight between the total station 117 and the positioning device 107 above an obstacle, or a shorter pole arrangement may be chosen to allow operation under an overhanging object or structure.

The pole arrangement 100 of the surveying pole 1 is schematically shown in greater detail in Figs. 2a and 2b, where Fig. 2a shows the pole arrangement 100 in a retracted position (the pole arrangement 100 is shorter) and Fig. 2b shows the pole arrangement in an expanded position (the pole arrangement 100 is longer). In Figs. 2a and 2b, the proportions of different elements of the surveying pole 1 and in particular of the pole arrangement 100 are exaggerated for clarity of the figures. Thus, the surveying pole 1 in Figs. 2a and 2b is not shown to scale.

Shown in Figs. 2a and 2b is thus the surveying pole 1 with the top unit 104 mounted on the pole arrangement 100. In the present example, the pole arrangement 100 comprises two pole sections 105, 106 telescopically arranged to provide length adjustment to the surveying pole: a first pole section 105 comprising the first end of the pole arrangement 100 and a second pole section 106 comprising the second end 102 of the pole arrangement 100. As illustrated by the different positions of the second pole section 106 in Figs. 2a and 2b, the second pole section 106 is telescopically movable within the first pole section 105. In other words, the cross section of the second pole section 106 is smaller than the cross section of the first pole section 105, such that the second pole section 106 may radially fit inside of the first pole section 105. A different arrangement, e.g., one in which the second pole section 106 has a larger cross section than the first pole section 105, and the first pole section 105 is telescopically movable within the second pole section 106 is also possible. A pole arrangement 100 having more than two pole sections is also conceivable.

The respective pole sections 105, 106 may be made of aluminium, which offers a good balance between stiffness, weight, and ease of manufacturing.

The second pole section 106 is here illustrated as being double walled, i.e., the second pole section 106 comprises an outer tube 123 and an inner tube 124. The second pole section 106 may be manufactured as a single component, for example by extrusion.

A ring 122 is mounted at the lower end of the second pole section 106.

As illustrated in Figs. 2a and 2b, the outer tube 123 of the second pole section 106 may optionally have a plurality of holes or openings 125 adapted to receive a fixation means, such as a locking pin (not shown) for locking the position of the pole sections, so that the positioning of the pole sections 105, 106 relative to each other is fixed. The first pole section 105 may comprise corresponding holes or openings for the same purpose (not shown). When using locking pins, care should be taken not to obstruct the light path 114, which would prevent the EDM unit from performing the desired measurement. In particular, it may not be appropriate to use a locking pin traversing the entire diameter of the first pole section 105 and/or the second pole section 106. Fixing the relative position of the pole sections 105, 106 may alternatively be achieved by a friction mechanism. Different alternatives to enable fixing the telescopic pole sections 105, 106 at a desired position will be familiar to the person skilled in the art.

A pointing tip 103, for placing in contact with the point of interest to be measured, is mounted at the first end 101 of the first pole section 105.

Further, a first portion 128 of the pole arrangement forms a reservoir 128a adapted to collect liquid, such that a collected liquid is in contact with a surface 111a of the target 111. The first portion 128 may be an integral part of a pole section 105 and/or the pointing tip 103 as illustrated in Figs. 2a and 2b. In an alternative embodiment, the first portion 128 forming the reservoir 128a may be a separate element attachable to a pole section 105.

In the present example, the target 111 is arranged in the first pole section 105, at the first end 101 and above the pointing tip 103. Different placements of the target 111 are possible. The target 111 is positioned at a distance 126, in the longitudinal direction, from the first end 101 and thus at a distance from (the tip of) the pointing tip 103. The distance 126 may for example be 5 cm to 45 cm, or 10 cm to 40 cm, or 15 cm to 35 cm, or 5 cm to 25 cm, or 5 cm to 15 cm. In particular, the distance 126 may be 10 cm. This may ensure that the target is above water level during measurement in most cases.

The first portion 128 forming the reservoir 128a may have an impermeable bottom and an impermeable side wall. Thus, in the upright position of the surveying pole 1 of Figs. 2a and 2b, any liquid collected in the reservoir 128a remains secured therein.

In normal operating conditions of the surveying pole 100, only air is present in the reservoir 128a. Thereby the surface 111a of the target 111 is in contact with the air present in the reservoir 128a. However, during use of the surveying pole 100, a liquid such as water may leak into the pole arrangement 100. The reservoir 128a is adapted to collect the liquid, in which case the target 111 may be partially or entirely surrounded by the liquid.

The target 111 may be arranged such that a top surface of the target 111 is above the reservoir 128a. This may facilitate the collection of liquid in the reservoir 128a, while still allowing the collected liquid to be in contact with one or more remaining surface 111a of the target 111.

Thus, the pole arrangement 100 may further comprise a second portion 129 arranged between the target 111 and the second end 102 of the pole arrangement 100. The pole arrangement 100 may be configured to allow liquid to pass from said second portion 129 to said first portion 128 and to be collected in said reservoir 128a. It is to be understood that preferably no liquid should penetrate the pole arrangement. However, this may not be possible to avoid in all possible operating conditions. Hence, it is advantageous if the pole arrangement 100 is configured to allow any liquid which has leaked into the pole arrangement 100 to be passed from the second portion 129 to the first portion 128 and be collected by the reservoir 128a.

The pole arrangement 100 may internally comprise ridges and/or grooves configured to guide the liquid towards the reservoir.

The top unit 104 may be mounted on the pole arrangement 100 by any suitable fastening means, for example comprising screws, bolts, threads, etc (not shown in the figure). In particular, the top unit 104 may be detachably mounted on the pole arrangement.

In embodiments where the pole arrangement has a fixed length (not illustrated in the figures), the pole arrangement may have similar characteristics as the pole arrangement described above, except for the length adjustment capability.

With reference to Fig. 3, an example of a top unit is described. The top unit 104 comprises all the elements of the top unit 104 described in connection to Fig. 1, i.e., the positioning device 107, the EDM unit 112, and the control unit 115. In addition, the top unit 104 comprises a power source or battery 130 for powering the components arranged within the top unit 104. The top unit 104 further comprises a communication device 127, which communication device 127 may be configured to transmit the determined length of the pole arrangement 100, or a calculated distance between the pointing tip 103 and the positioning device 107, to an external unit or instrument. For example, in a scenario as depicted in Fig. 1, the communication device 127 may be configured to transmit a determined or calculated length to the total station 117.

The top unit 104 is mounted on the pole arrangement 100. In Fig. 3, only the second pole section 106 and the second end 102 of the pole arrangement 100 are shown.

In the example of Fig. 3, the EDM unit 112 is arranged along the longitudinal axis A. Thus, the EDM unit 112 emits light along a light path 114 which extends in parallel with the longitudinal axis A. In particular, the light path 114 coincides with the longitudinal axis A. An optical arrangement (not shown) comprising, e.g., a converging lens of focal length shorter than the distance between the top unit 104 and the target 111 may provide a divergent light beam on the target 111. As mentioned above, in other embodiments, the EDM unit 112 may be arranged offset with respect to the longitudinal axis A.

With reference to Figs. 4a and 4b, an example of a target and associated reservoir is described. The target 111 is arranged relative to the reservoir such that the medium present in the reservoir 128a is in contact with the surface 111a of the target 111. As the emitted light 114a reaches the target 111, the target 111 will reflect and/or refract the light depending on the medium in contact with the surface 111a of the target 111. The target 111, as shown in Figs. 2a-2b, 4a-4b, is a corner cube prism having three mutually perpendicular, intersecting surfaces.

The corner cube prism 111 is arranged with its top face perpendicular to the longitudinal axis A. Hence, the three mutually perpendicular surfaces are each oriented at an angle of 45° with respect to the longitudinal axis A.

It is known that total internal reflection (TIR) occurs when light travels from a medium with a higher refractive index to one with a lower refractive index, and the angle of incidence is greater than the critical angle. As shown in Fig. 4a, the target 111 is a prism made out of glass and, in the absence of liquid in the reservoir 128a, the medium in contact with the surface 111a of the target 111 is air.

According to an example, the refractive index of glass is approximately 1.5, and the refractive index of air is approximately 1.0. The critical angle for a glass-air interface is then approximately 41.8°. Because of the orientation of the surface 111a at 45° with respect to the longitudinal axis A, light emitted by the EDM 112 and propagating in the corner cube prism 111 thus has an angle of incidence on the surface 111a greater than the critical angle of 41.8°. Thus, total internal reflection occurs. The light beam is subsequently reflected at the two remaining surfaces of the corner cube prism 111, and thus reflected back towards the EDM unit 112. When a sufficient energy level of the reflected light 114b is detected no warning signal is generated by the control unit 115 and further assessment of the input may be performed, such as determining a length of the surveying pole 100 based on the detected light.

If another medium enters the reservoir 128a and comes in contact with the surface 111a of the target 111, the emitted light 114a might instead be refracted 114c, as shown in Fig. 4b. In this illustrated scenario, water has entered the pole arrangement 100 and has then been collected in the reservoir 128a. Water has a refractive index of approximately 1.33. The critical angle for a glass-water interface is approximately 62.5°. Since the surface 111a is oriented at 45°, the angle of incidence of the light emitted by the EDM 112 and propagating in the corner cube prism is smaller than the critical angle when the surface 111a is in contact with water.

Thus, in normal operating conditions, in which no water is present in the reservoir 128a, light emitted by the EDM 112 has an angle of incidence on internal surfaces 111a of the target 111 greater than the critical angle. Total internal reflection occurs, and the light is thus reflected back towards the EDM. In contrast, when water is present in the reservoir 128a, light emitted by the EDM 112 has an angle of incidence on the surface 111a of the target 111 smaller than the critical angle. Light is thereby refracted.

In general, prism glass may have a refractive index of approximately 1.45 to 2.

It should be noted that the reservoir 128a may be only partially filled with water. In such a scenario a first portion of the surface 111a of the target 111 may be in contact with a first medium (air) and a second portion of the surface 111a of the target 111 may be in contact with a second medium (water), resulting in that one portion of the light which has reached the target 111 may be reflected towards the detector unit 112 and another portion may be refracted into the reservoir 128a.

If the reservoir is filled with water such that all light emitted by the detector unit 112 is refracted and none is reflected back to the detector unit 112, no light is detected by the detector unit 112. Consequently, no measurement on the basis of the detected light is possible, e.g., a measurement of the distance between the detector unit 112 and the target.

If the reservoir is partially filled with water, a measurement may be possible if a sufficient share of light is reflected, and the detected light has a sufficient energy level. If a larger share of light is refracted and the energy level of the detected light is decreased, a measurement may not be possible.

The control unit 115 is configured to generate a warning signal upon an absence of detected light reflected by the target, or upon a decrease in energy level of the detected light reflected by the target. Such a warning signal may thus be indicative of the presence of liquid, e.g., of water, in the pole arrangement.

The control unit 115 may be configured to generate the warning signal when the energy level of the detected light reflected by the target 111 is below a predetermined threshold. Additionally, or alternatively, the control unit may generate the warning signal when a standard deviation of the energy level of the detected light reflected by the target, or a standard deviation of a measurement performed by the EDM unit 112 exceeds a predetermined standard deviation threshold.

As mentioned, the surveying pole 100 may be able to conduct accurate measurement even in a situation where the detector unit 112 detects a small decrease of energy level. A predetermined threshold may be set to ensure that if the energy level of the detected light is not sufficient to perform a measurement, the control unit 112 will generate a warning signal. Alternatively, a higher threshold may be chosen, such that a warning signal is generated even though distance measurement by the EDM 112 is possible. In that case a warning may alert the operator of the surveying pole that at least some liquid is present in the pole arrangement and that the obtained measurement may not be fully accurate.

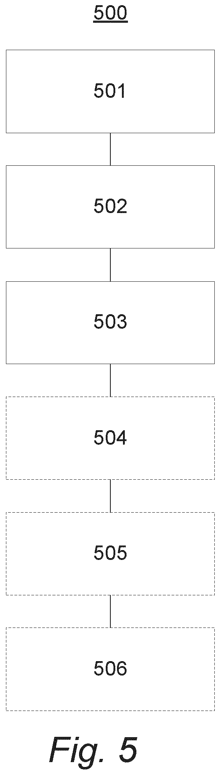

With reference to Fig. 5, a method 500 according to an aspect of the present inventive concept will now be described. The method 500 is implemented in a surveying pole 1 as described above. The method 500 may also be implemented by a top unit 104 as described above.

At step 501, the detector unit/EDM unit 112 emits light for propagation in the pole arrangement 100 towards the target.

At step 502, the detector unit/EDM unit 112 detects light reflected by the target 111.

At step 503, the control unit 115 generates a warning signal if there is an absence of detected light reflected by the target 111 or if there is a decrease in energy level of the detected light 114b reflected by the target 111.

In an optional step 504, the detector unit/EDM unit 112 determines a distance to the target 111 based on the detected light 114b.

In an optional step 505, the control unit or a separate processor 115 determines a length of the pole arrangement 100 based on the distance determined by the detector unit/EDM unit 112.

In an optional step 506, the determined length of the pole arrangement 100, or a distance between the pointing tip 103 and the positioning device 107 derived therefrom, is transmitted to an external unit or instrument, such as for example an optionally mobile control unit, or a total station 117 cooperating with the surveying pole 1.

## Claims

1. A surveying pole comprising:
a pole arrangement extending along a longitudinal axis between a first end and a second end,
a target internally arranged in the pole arrangement at the first end, the target being configured to reflect and/or refract light depending on a medium in contact with a surface of the target,
a top unit mounted on the pole arrangement at the second end, the top unit comprising a detector unit configured to:
emit light for propagation in the pole arrangement towards the target, and
detect light reflected by the target,
wherein said pole arrangement comprises a first portion at the first end forming a reservoir adapted to collect liquid, such that a collected liquid is in contact with said surface of the target,
wherein the surveying pole further comprises a control unit configured to, upon an absence of detected light reflected by the target, or upon a decrease in energy level of the detected light reflected by the target, generate a warning signal.

2. The surveying pole according to claim 1, further comprising an optical arrangement adapted to provide a divergent light beam on the target, wherein optionally said optical arrangement comprises a converging lens arranged between said detector unit and the pole arrangement, which lens has a focal length shorter than the distance between the top unit and the target.

3. The surveying pole according to any one of the preceding claims, wherein said energy level of detected light reflected from said target corresponds to the share of light emitted by the detector unit which is reflected by the target towards the detector unit.

4. The surveying pole according to any one of the preceding claims, wherein the control unit is configured to generate the warning signal when the energy level of the detected light reflected by the target is below a predetermined threshold, or when a standard deviation of a measurement performed on the detected light exceeds a predetermined standard deviation threshold.

5. The surveying pole according to any one of the preceding claims, wherein the first portion of the pole arrangement forming the reservoir comprises an impermeable bottom and an impermeable side wall.

6. The surveying pole according to any one of the preceding claims, wherein said pole arrangement further comprises a second portion arranged between said target and said second end of the pole arrangement, wherein the pole arrangement is configured to allow liquid to pass from said second portion to said first portion to be collected in said reservoir.

7. The surveying pole according to any one of the preceding claims, wherein the target is a prism.

8. The surveying pole according to any one of the preceding claims, wherein the target is total internal reflection retroreflector, optionally the target is a corner cube prism.

9. The surveying pole according to any one of the preceding claims, further comprising an electronic distance measurement (EDM) unit, optionally the EDM unit is the same as the detector unit.

10. The surveying pole according to claim 9, wherein the EDM unit is configured to determine a distance to the target based on the received and detected light,
wherein the control unit is configured to determine a length of the pole arrangement based on the distance determined by the EDM unit.

11. The surveying pole according to claim 9 or 10, wherein the detector unit comprises a laser for emitting light towards the target.

12. The surveying pole according any one of claims 9-11, wherein the control unit is configured to generate the warning signal when
the energy level of the detected light reflected by the target is below a predetermined threshold, wherein said predetermined threshold corresponds to the minimum energy level needed for the EDM unit to be able to determine the distance to the target based on the received and detected light, or
a standard deviation of the distance determined by the EDM unit exceeds a predetermined standard deviation threshold.

13. The surveying pole according to claim 10, wherein the top unit further comprises a communication device configured to transmit the determined length of the pole and/or said warning signal to an external unit.

14. The surveying pole according to any one of the preceding claims, wherein the pole arrangement comprises at least a first pole section and a second pole section telescopically arranged to provide length adjustment of said surveying pole.

15. A method implemented in a surveying pole according to any one of claims 1-14, the method comprising:
emitting, by the detector unit, light for propagation in the pole arrangement towards the target,
detecting, by the detector unit, light reflected by the target, and
generating a warning signal, by the control unit, upon an absence of detected light reflected by the target, or upon a decrease in energy level of the detected light reflected by the target.
